# FASCICULE DE BREVET EUROPEEN

(11) **EP 0 838 684 B1**
(45) Date de publication et mention de la délivrance du brevet: **18.12.2002**
(21) Numéro de dépôt: 97402456.4
(22) Date de dépôt: 17.10.1997
(51) Int. Cl.: G01P 3/44, G01P 1/00

(54) **Dispositif de retenue d'une tête de montage d'un capteur d'informations sur un support angulaire**
Haltevorrichtung für einen Montagekopf eines Messaufnehmers auf einem winkelförmigen Träger
Retention device for a sensor mounting head on an angular support

(30) Priorité: 25.10.1996 FR 9613032
(43) Date de publication de la demande: 29.04.1998
(73) Titulaire: SNR ROULEMENTS, 74010 Annecy Cédex (FR)
(72) Inventeur: Riviere, Isabelle, 74600 Seynod (FR)
(74) Mandataire: Ernst-Schonberg, Michel

(56) Documents cités:
- EP-A- 0 619 438
- WO-A-93/13424
- DE-A- 4 420 937
- FR-A- 2 130 250

## Description

L'invention concerne un dispositif de retenue d'une tête de montage d'un capteur d'informations sur un support annulaire, qui est montée dans une glissière dudit support et associée à des moyens élastiques à nervure de rétention et de rappel portés par ledit support, au contact d'une rainure transversale portée par ladite tête de montage, pour réaliser l'immobilisation radiale et axiale de ladite tête de montage du capteur dans la glissière du support.

La publication FR-A-2703740 décrit un tel dispositif de retenue appliqué à un roulement dans lequel un codeur se déplace devant la tête de montage. Cependant un tel dispositif ne peut éviter les montages défectueux de la tête de montage du capteur. Lorsque le montage est défectueux, la tête de montage du capteur coulisse le long de la glissière du support et demeure coincée entre ledit support et le flanc du roulement.

Dans cette hypothèse, le fonctionnement du capteur d'informations peut être perturbé ou empêché à la suite d'un écartement entre la tête de montage et le codeur.

Il en résulte que le montage défectueux de la tête de montage du capteur induit des suppressions intermittentes du signal ou une éjection accidentelle de la tête de montage du capteur hors de son support.

L'invention a pour objet un dispositif de retenue d'une tête de montage d'un capteur d'informations qui se propose d'éviter les montages défectueux sur un support fixe.

L'invention a également pour objet un dispositif de retenue d'une tête de montage d'un capteur d'informations sur un support annulaire, préalablement fixé sur l'élément fixe d'un roulement ou d'un palier.

Selon l'invention, la tête de montage porte au voisinage de sa zone de contact avec la glissière de réception du support, au moins un moyen de butée, obstacle au déplacement radial erroné de la tête de montage sur le support.

Le dispositif de retenue ainsi réalisé permet une détection instantanée du montage erroné du capteur d'informations et assure la prévention des pannes et défectuosités du système de détection.

D'autres caractéristiques et avantages de l'invention apparaîtront à la lecture de la description d'un exemple de réalisation du dispositif de montage, en référence aux dessins annexés dans lesquels :
- la figure 1 est une vue en coupe axiale d'un roulement équipé d'un dispositif de retenue conventionnel de la tête de montage d'un capteur, en position de montage défectueux,

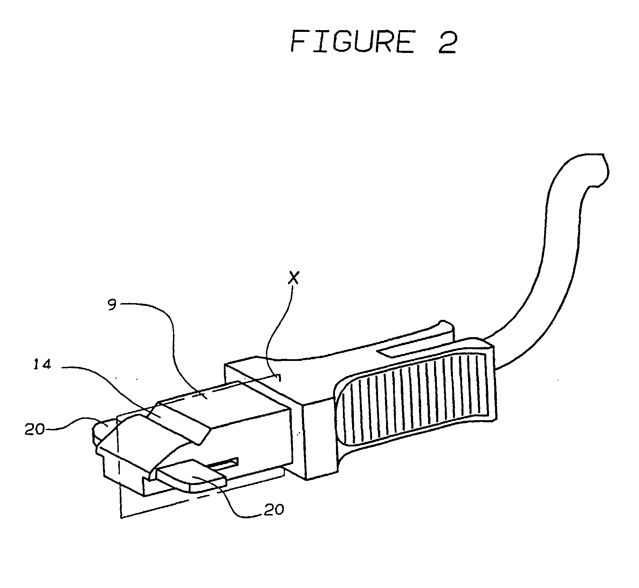

- la figure 2 est une vue en perspective à une échelle agrandie de la tête de montage d'un capteur perfectionnée conformément à l'invention,
- la figure 3 est une vue en élévation de la position relative défectueuse de la tête de montage représentée à la figure 2 par rapport à son support annulaire,
- la figure 4 est une vue en coupe suivant la flèche F1, de la position représentée à la figure 3,
- la figure 5 est une vue en coupe axiale d'un roulement équipé du dispositif de retenue perfectionné de la tête de montage d'un capteur telle que représentée à la figure 2,
- la figure 6 est une représentation perspective d'un exemple de réalisation du support annulaire et de la tête de montage du capteur.

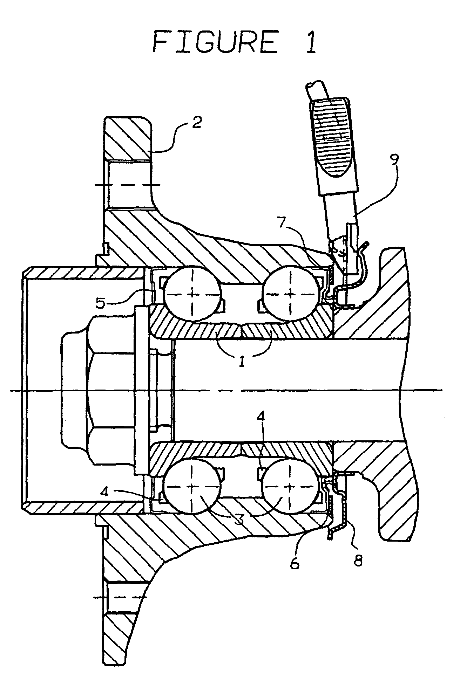

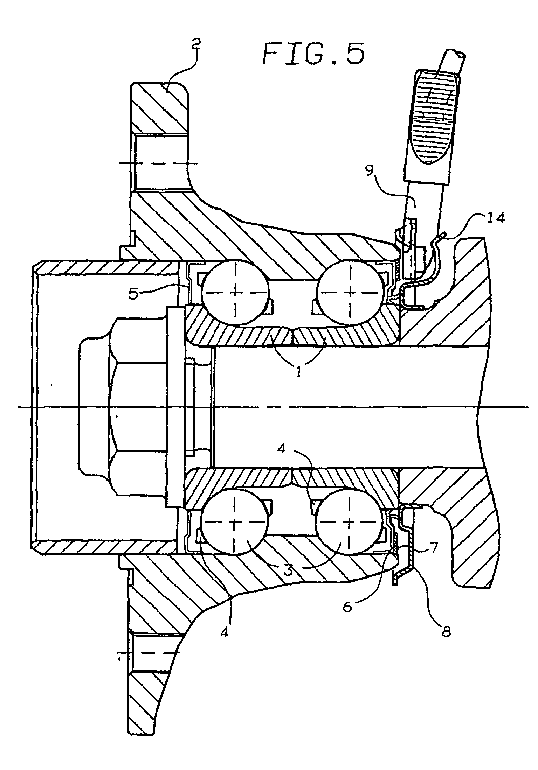

Le roulement représenté aux figures 1 et 5 est constitué par une bague intérieure fixe 1 fractionnée en deux parties, une bague extérieure tournante 2 et par des corps roulants 3 disposés entre lesdites bagues dans des cages 4.

Le roulement est rendu étanche à titre d'exemple par un premier anneau d'étanchéité tournant 5 et par un deuxième joint d'étanchéité tournant 6. Le joint d'étanchéité 6 porte ainsi que cela est connu par la publication FR-A-2700588 un codeur 7 qui se déplace devant la tête de montage 9 d'un capteur retenu sur un support annulaire fixe 8.

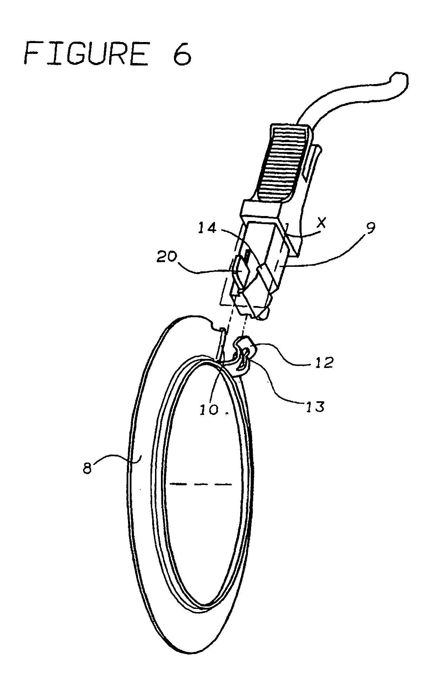

Un exemple de réalisation du support annulaire et du dispositif de retenue de la tête de montage du capteur sont décrits dans la publication FR-A-2703740. Cet exemple de réalisation est représenté aux figures 1, 3, 4, 5, 6 du dessin et n'est présentement pas décrit dans son ensemble.

D'une manière générale le support 8 possède une zone annulaire en forme de disque dans laquelle est découpée une fente limitée latéralement par une glissière de réception 10 de ladite tête de montage 9.

La zone annulaire porte de manière en soi connue une languette élastique 12 qui porte une nervure de rétention et de rappel 13.

La nervure de rétention et de rappel 13 est ici au contact d'une rainure transversale 14 portée par la tête de montage 9.

On réalise de la sorte comme représenté à la figure 5, l'immobilisation radiale et axiale de la tête de montage 9 dans la glissière correspondante du support 8.

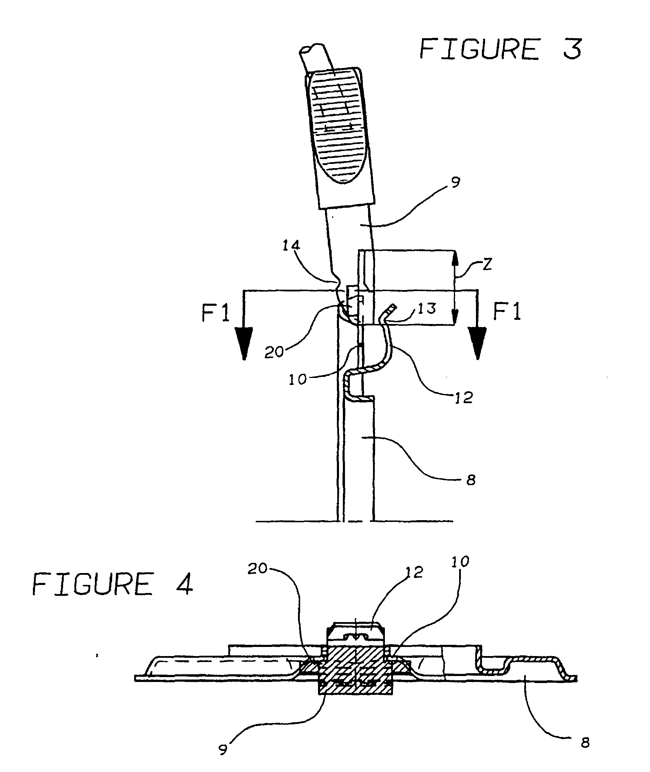

Les figures 3 et 4 se rapportent à une position relative défectueuse de la tête de montage 9 par rapport au support 8. La figure 3 montre plus précisément le montage inversé par erreur de la tête 9 ainsi que le perfectionnement nécessaire à éviter la défectuosité de ce montage.

A cet effet on prévoit sur la tête de montage 9 et au voisinage d'une zone de contact "Z" de ladite tête avec la glissière de réception 10 du support 8, au moins une proéminence transversale de butée 20 pour constituer sur la tête de montage 9 un obstacle à son déplacement radial erroné par rapport au support 8 et en direction de l'axe du roulement.

Au vu des figures 3 et 4 on voit que par suite d'une orientation défectueuse de la tête de montage 9, cette dernière ne saurait être placée dans sa position de rétention correcte sur le support 8.

A titre d'exemple, les butées 20 sont réalisées sous la forme d'un ensemble de bossages orientés symétriquement de part et d'autre d'un plan médian "X" de la tête de montage 9.

Il est bien évident que l'invention n'est aucunement limitée à la forme particulière représentée de la tête de montage 9 et/ou du support 8, et qu'elle englobe leurs différentes variantes de réalisation.

## Revendications

1. Dispositif de retenue d'une tête de montage (9) d'un capteur d'informations sur un support annulaire (8) qui est montée dans une glissière (10) dudit support (8) et associée à des moyens élastiques à nervure de rétention et de rappel (13), portés par ledit support (8), au contact d'une rainure transversale (14) portée par ladite tête de montage (9), pour réaliser l'immobilisation radiale et axiale de ladite tête de montage du capteur dans la glissière (10) du support (8), **caractérisé par le fait que** la tête de montage (9) porte au voisinage de sa zone de contact avec la glissière de réception (10) du support (8), au moins un moyen de butée (20), obstacle au déplacement radial erroné de ladite tête de montage (9) par rapport au support (8) et qui est constitué par une proéminence transversale, limiteur du déplacement radial de la tête de montage (9) en réponse à une orientation défectueuse de ladite tête de montage (9) dans son support (8).

2. Dispositif de retenue selon la revendication 1, **caractérisé par le fait que** le moyen de butée (20) est constitué par deux bossages orientés symétriquement de part et d'autre d'un plan médian (X) de la tête de montage (9).

## Claims

1. A device for retaining an assembly head (9) of an information sensor on an annular support (8) which is mounted in a slideway (10) of the support (8) and associated with elastic means with a retention and recall rib (13), borne by the support (8), in contact with a transverse groove (14) borne by the assembly head (9) in order radially and axially to immobilise the assembly head of the sensor in the slideway (10) of the support (8), **characterised in that** the assembly head (9) bears, in the vicinity of its zone of contact with the receiving slideway (10) of the support (8), at least one stop means (20) impeding the incorrect radial displacement of the assembly head (9) with respect to the support (8), and which is formed by a transverse projection, limiting the radial displacement of the assembly head (9) in response to a defective orientation of this assembly head (9) in its support (8).

2. A retaining device as claimed in claim 1, **characterised in that** the stop means (20) is formed by two bosses oriented symmetrically on either side of a median plane (X) of the assembly head (9).

## Patentansprüche

1. Vorrichtung zur Aufnahme des Montagekopfes (9) eines Informationsfühlers in einer ringförmigen Halterung (8), der in eine Gleitschiene (10) der Halterung (8) eingesetzt ist und mit einer elastischen Anordnung zusammenwirkt, die eine Aufnahme- und Rückhalterippe (13) aufweist und die an der Halterung (8) befestigt ist und in eine quer verlaufende Nut (14) eingreift, die im Montagekopf (9) ausgebildet ist um so die radiale und axiale Feststellung des Montagekopfes des Fühlers in der Gleitschiene (10) der Halterung (8) zu bewirken, **dadurch gekennzeichnet, dass** der Montagekopf (9) in der Nähe seines Kontaktbereichs mit der der Aufnahme dienenden Gleitschiene (10) der Halterung (8) mit wenigstens einem Anschlag (20) versehen ist, der ein Hindernis für die fehlerhafte radiale Verschiebung des Montagekopfes (9) relativ zur Halterung (8) bildet und der aus einem quer angeordneten Vorsprung besteht, welcher die radiale Verschiebung des Montagekopfes (9) als Folge einer fehlerhaften Ausrichtung des Montagekopfes (9) in seine Halterung (8) begrenzt.

2. Vorrichtung nach Anspruch 1, **dadurch gekennzeichnet, dass** der Anschlag (20) aus zwei Höckern besteht, die symmetrisch zu beiden Seiten einer Mittenebene (X) des Montagekopfes (9) angeordnet sind.
